## Europäisches Patentamt

## European Patent Office

## Office européen des brevets

(19)

(11) Veröffentlichungsnummer: **0 052 286**
**B1**

(12)

# EUROPÄISCHE PATENTSCHRIFT

(45) Veröffentlichungstag der Patentschrift:
**30.05.84**

(51) Int. Cl.³: **C 08 L 21/00,** C 08 J 5/10

(21) Anmeldenummer: **81109324.4**

(22) Anmeldetag: **30.10.81**

(54) **Kautschukmischungen und daraus hergestellte Vulkanisate.**

(30) Priorität: **15.11.80 DE 3043227**

(43) Veröffentlichungstag der Anmeldung:
**26.05.82 Patentblatt 82/21**

(45) Bekanntmachung des Hinweises auf die Patenterteilung:
**30.05.84 Patentblatt 84/22**

(84) Benannte Vertragsstaaten:
**AT BE CH DE FR GB IT LI LU NL**

(56) Entgegenhaltungen:
**DE - A - 2 802 894**
**GB - A - 1 389 800**
**US - A - 4 148 769**

(73) Patentinhaber: **HOECHST AKTIENGESELLSCHAFT,**
**Postfach 80 03 20, D-6230 Frankfurt am Main 80 (DE)**

(72) Erfinder: **Die Erfinder haben auf ihre Nennung verzichtet**

# Beschreibung

Es ist eine Anzahl von Kautschukmischungen beschrieben worden, mit denen eine gute Haftung des Kautschuks an Stahlcord, z.B. solchem, der mit Messing oder Zink beschichtet ist, erreicht werden soll. So ist in der US-PS 4 148 769 eine Kautschukmischung auf der Grundlage eines Kautschuks, eines verstärkenden Pigments wie Kieselsäure, von Schwefel und anderen Inhaltsstoffen beschrieben, deren wesentliches Merkmal in einer Kombination von Bleioxyd und Kobaltsalz einer Fettsäure und der Verwendung von Resorcin oder eines Vorkondensats davon zusammen mit einem Formaldehydspender besteht. Weiter wird in Kautschuk und Gummi, Kunststoffe, Band 33 (1980) 611 ein ähnliches System beschrieben, bei dem jedoch kein Bleioxyd mitverwendet wird. Ferner wird in der DE-AS 20 02 023 ein Förderband mit erhöhter Nachheizbeständigkeit beschrieben, dessen Gummieinbettmasse Kieselsäure, Resorcin und einen in der Wärme Formaldehyd abspaltenden Stoff ungenannter Konstitution enthält. Nach einer bevorzugten Ausführungsform kann diese Gummieinbettmasse auch Kobaltnaphthenat bzw. ein Phenolformaldehydharz nicht näher beschriebener Zusammensetzung enthalten, wobei nicht einmal angegeben ist, ob es sich um ein Resol oder einen Novolak handelt.

Schliesslich beschreibt die DE-AS 24 14 789 eine Kautschukmasse, die aus Naturkautschuk oder bestimmten synthetischen Kautschuken, einer Formaldehyd abspaltenden Verbindung und einem Cokondensat aus Formaldehyd und einem Gemisch aus Resorcin und einem weiteren Phenol in den Molverhältnissen 0,4:1 bis 1,3:1 oder einem Gemisch aus einem Kondensat und Resorcin mit Formaldehyd in den Molverhältnissen 0,4:1 bis 1,0:1 und dem Kondensat eines Phenols mit Formaldehyd in den Molverhältnissen 0,5:1 bis 1,4:1 besteht, wobei das Gewichtsverhältnis von Resorcin:Phenol 95:5 bis 50:50 und das Gewichtsverhältnis des Resorcin-Formaldehydkondensats zum Phenol-Formaldehydkondensat 95:5 bis 50:50 beträgt. Über die Mitverwendung von Kobaltsalzen wird in dieser Druckschrift jedoch nichts gesagt.

Soweit die bekannten Massen Resorcin enthalten, haben sie den schwerwiegenden Nachteil, dass bei der Einarbeitung des Resorcins in die Mischung ein starkes Rauchen auftritt, weil dieses Einmischen bei verhältnismässig hohen Temperaturen erfolgen muss und das Resorcin dabei zu einem merklichen Anteil in die die Atmosphäre entweicht. Dies ist wegen der toxischen Eigenschaften des Resorcins unerwünscht. Dieser Nachteil wird zwar bei den bekannten Vorschlägen vermieden, die von Kondensaten des Resorcins mit Aldehyden ausgehen, jedoch ist die Verwendung solcher Kondensate aus wirtschaftlichen Gründen wegen des verhältnismässig hohen Preises für Resorcin nicht erwünscht.

Durch die Erfindung werden die vorgenannten Nachteile nun vermieden. Gleichzeitig werden Kautschukmischungen zur Verfügung gestellt, die neben guten mechanischen Eigenschaften und sehr guter Haftung auf Stahlcord die hervorragende Eigenschaft haben, das diese Haftung nicht nur nach trockener Behandlung, sondern, was ganz besonders wichtig ist, gerade auch nach einer intensiven Feuchtigkeitseinwirkung bei höheren Temperaturen erhalten bleibt. Schon in dieser Beziehung sind sie den meisten der bekannten Systeme deutlich überlegen.

Gegenstand der Erfindung sind nun Kautschukmischungen mit verbesserter Haftung an Stahlcord auf der Grundlage von a) mit Schwefel vulkanisierbaren Kautschuk-Typen, b) verstärkenden Füllstoffen, c) Schwefel als Vulkanisationsmittel, d) einem Phenolharz, e) einer Verbindung eines Metalls, das in mehreren Wertigkeitsstufen auftreten kann, f) einem Methylen-Spender und g) gegebenenfalls weiteren üblichen Zusatzstoffen, die dadurch gekennzeichnet sind, dass die Komponente b) 10–50, vorzugsweise 15–40 Gew.-% aktive Kieselsäure enthält und die Komponente d) aus dem Harz eines ein- oder mehrwertigen Phenols mit Aldehyden, vorzugsweise Formaldehyd besteht, in dem höchstens 30% der Phenolkomponente aus einem einkernigen mehrwertigen Phenol bestehen.

Kautschukmischungen gemäss der Erfindung enthalten also ausser den gewöhnlich verwendeten Zusätzen als verstärkenden Füllstoff einen Anteil an Kieselsäure, ein Phenolharz (und nicht etwa ein Resorcinharz), ein Metallharz und einen Methylen-Spender, letzteren vorteilhaft in Form eines reaktiven Melaminharzes.

Geeignete Kautschuk-Typen sind beispielsweise Naturkautschuk, Polyisopren, Polybutadien, Styrolkautschuk, Acrylnitrilkautschuk, Butylkautschuk, Äthylen-Propylen-Dien-Terpolymer-Kautschuk oder deren Gemische, wie sie üblicherweise in der Reifenindustrie oder zur Herstellung technischer Gummiwaren verwendet werden.

Als Füllstoffe können neben der aktiven Kieselsäure die handelsüblichen bekannten Russe, weisse Füllstoffe wie nicht-aktive Kieselsäuren, Kaoline und Kreide verwendet werden. Unter den Begriff der Füllstoffe fallen auch Pigmente anorganischer oder organischer Natur, wie Titandioxyd, Eisenoxyd und dergleichen. Unter der erfindungsgemäss verwendeten aktiven Kieselsäure werden solche Typen verstanden, die eine hohe spezifische Oberfläche nach Brunauer, Emmett und Teller, Journ. Am. Chem. Soc. 60 (1938) 309 von über 150 m²/g aufweisen. Derartige Produkte haben z.B. eine Dichte von etwa 2 g/cm³ und einen pH-Wert von 5–7. Handelsübliche Typen sind beispielsweise Vulkasil S der Bayer AG, Leverkusen und ®Ultrasil VN 3 der Degussa, Frankfurt am Main. Die Gesamtmenge der Füllstoffe beträgt im allgemeinen 30–150, vorzugsweise 50–100 Gew.-Teile und die der Kieselsäure im allgemeinen 5–35 undvorzugsweise 10–30 Gew.-Teile je 100 Gew.-Teile Kautschuk.

Zur Vulkanisation wird in der Regel Schwefel als solcher zusammen mit den allseits bekannten Beschleunigern verwendet. In manchen Fällen kann jedoch der elementare Schwefel ganz oder zum Teil in Form schwefelspendender Verbindungen wie Thiuramsulfide verwendet werden. Die Vulkanisation mit Schwefel ist aber bevorzugt. Der Vulkanisationsverlauf kann durch Auswahl der Beschleuniger den praktischen Erfordernissen angepasst werden.

Als Phenolharze kommen bevorzugt Novolake in Betracht, wenn auch Resole grundsätzlich geeignet sind. In Frage kommen z.B. Harze, die aus Phenol, mehrwertigen Mehrkernphenolen, wie Bisphenolen, z.B. Diphenylolpropan oder Diphenylolmethan, oder Gemischen aus Phenol und Alkylphenolen, wie tertiär-Butylphenol, Octylphenol oder Nonylphenol und Aldehyden, vorzugsweise Formaldehyd erhalten werden. In den Novolaken ist das Molverhältnis des Phenols zum Aldehyd im allgemeinen im Bereich von 1:0,6 bis 1:0,9. Die Harze können ausserdem weichmachende Anteile, wie Polyäthylenglykole, Kolophonium, Tallöl oder andere geeignete Plastifiziermittel wie vegetabilische Öle enthalten bzw. mit Naturharzsäuren oder olefinisch ungesättigten Kohlenwasserstoffen wie Styrol modifiziert sein. Grundsätzlich können auch Phenolharze verwendet werden, deren Phenolkomponente ausschliesslich aus Alkylphenolen besteht, die eine Alkylgruppe von 1–12 C-Atomen tragen. Phenolharze auf der Basis von Alkylphenolen mit einer Alkylgruppe von 2–12 C-Atomen kommen jedoch nur bedingt in Frage, da sie wengier härtbar sind. Ferner können die Phenolharze Zusätze von Phenylphenol oder mehrere Alkylgruppen enthaltenden Phenolen enthalten. Möglich, wenn auch weniger bevorzugt, ist auch die Modifizierung in der Weise, dass bis zu 30% der Phenolkomponente durch ein einkerniges mehrwertiges Phenol, insbesondere Resorcin, eventuell aber auch Brenzkatechin oder Pyrogallol ersetzt sind. Für den praktischen Gebrauch kommen insbesondere Novolake auf Basis des Phenols $C_6H_5OH$ in Frage, daneben aber auch Novolak-Harze aus Phenol und Gemischen aus Phenol und Cashew-Nussschalenöl sowie aus Phenol und Alkylphenolen mit 4 bis 12 C-Atomen im Alkylteil, insbesondere p-tert.-Butyl-, Octyl- oder Nonylphenol. Der Anteil der substituierten Phenole im Novolak kann dabei variieren, wobei jedoch der Novolak noch härtbar sein soll. So wird man im allgemeinen einen Anteil an Alkylphenol von höchstens 70 Mol-% der gesamten Phenolkomponente wählen.

Der Anteil des Phenolharzes beträgt in der Regel 0,5 bis 20, vorzugsweise 1 bis 10 Gew.-%, bezogen auf Kautschuk. In Einzelfällen lassen sich auch grössere Mengen, z.B. 50 Gew.-%, bezogen auf Kautschuk, verwenden. Bei einem derart hohen Novolakanteil erhält man harte Produkte, die sich in ihren Eigenschaften wesentlich von den üblichen hochelastischen Kautschukvulkanisaten unterscheiden.

Als Metallverbindungen kommen vor allem Salze, z.B. solche des Mangans, Vanadiums, Bleis, Eisens, Nickels, Selens, Tellurs und insbesondere des Kobalts in Betracht, wobei die Metalle bevorzugt organisch gebunden sind, z.B. als Chelate oder an carboxylgruppenhaltige Verbindungen, insbesondere gesättigte oder ungesättigte Fettsäuren und Naphthensäuren. Zum Beispiel kommen die Octoate, Laurate, Stearate, Palmitate und Linoleate in Betracht. Zweckmässig verwendet man diese Metallsalze in Form der handelsüblichen Präparate mit verhältnismässig hohem Metallgehalt, z.B. Kobaltpräparate mit 5–16%, Eisennaphthenat mit 7–8, Nickeloctoat mit 15, Bleinaphthenat mit 30 oder Bleioctoat mit 38–40% Metallgehalt, jedoch vor allem mit geringen Lösemittelgehalten. Ausser Salzen sind in Einzelfällen auch Oxyde geeignet. Der Metallgehalt, bezogen auf Kautschuk, beträgt zweckmässig 0,05 bis 1, vorzugsweise 0,08 bis 0,8 Gew.-%. In einzelnen Fällen kann er jedoch ausserhalb dieses Bereichs liegen.

Als Methylenspender kommen neben Hexamethylentetramin hydroxylgruppenhaltige aminoplastbildende Verbindungen in Betracht. Als solche seien beispielsweise genannt Melaminharze, wie sie durch Umsetzung von Melamin mit 0,5 bis 6 Mol Aldehyd, vorzugsweise Formaldehyd, erhalten werden können. Bevorzugt sind Hexamethoxymethylmelamin oder entsprechende höherkondensierte mehrkernige Produkte oder zumindest teilweise verätherte Trimethylol-, Tetramethylol- oder Pentamethylol-Melaminharze. Der Kondensationsgrad aller Aldehyd- insbesondere Formaldehyd-Harze und ihr Gehalt an freien Alkylol-, insbesondere Methylolgruppen, kann in üblicher Weise durch entsprechende Einstellung des Reaktionsmediums geregelt werden.

Weiterhin kommen beispielsweise in Frage Polymethylolharnstoffe, Mischkondensate aus Melamin, Harnstoff bzw. anderen aminoplastbildenden Verbindungen und Formaldehyd, und Produkte, die durch Umsetzung von Melamin mit mehr als 6 Mol, z.B. 8 Mol Aldehyd, vorzugsweise Formaldehyd, erhalten wurden, bzw. die Äther, vorzugsweise Methyläther aller dieser Produkte. Geeignet sind also z.B. auch solche Produkte, in denen an einen Teil der NH-Bindungen des Melamins mehr als ein Mol Formaldehyd angelagert ist, und die unverätherten oder verätherten Methylolverbindungen der zugänglichen Guanamine wie Aceto-, Benzo- oder Formoguanamin. Ein derartiges Produkt ist z.B. das Tetramethoxymethylbenzoguanamin, das in fester Form anfällt. Geeignet sind auch Produkte, die durch Umsetzung von Harnstoff mit 2 bis 4 Mol Formaldehyd erhalten werden.

Im Hinblick auf die Verträglichkeit mit Kautschuk sind Verbindungen besonders bevorzugt, deren Methylolgruppen zumindest teilweise durch Umsetzung mit einwertigen Alkoholen mit 1 bis 12, vorzugsweise 1 bis 8 C-Atomen, wie Methanol, Äthanol, den verschiedenen Propanolen und Butanolen, Äthylhexylalkohol, n-Octanol, Nonanol und Dodecylalkohol veräthert sind.

Falls die flüssige Lieferform solcher Harze für die Anwendung nicht optimal ist, können die Harze durch Adsorption auf geeignete feste Trägermaterialien mit Wirkstoffgehalten bis zu 75% aufgezogen werden und so als rieselfähige Produkte zum Einsatz gelangen.

Die erfindungsgemässen Mischungen können in üblicher Weise in Innenmischern oder auf Mischwalzen hergestellt werden. Beim Einarbeiten der Harze ist darauf zu achten, dass die Temperatur in irgendeiner Phase der Mischungsherstellung den Schmelzpunkt von schmelzbaren Stoffen, insbesondere der Novolakharze, überschreitet, damit sich diese völlig verteilen können. Ferner ist wichtig, dass die Methylenspender so eingearbeitet werden, dass es nicht zu einer vorzeitigen Eigenkondensation oder zu einer vorzeitigen Reaktion mit dem zu härtenden Novolak kommt. Das ist möglich, wenn die Methylenspender am Ende des Mischvorganges bei nicht zu hohen Temperaturen eingearbeitet werden. Die Temperatur richtet sich nach dem jeweils verwendeten Methylenspender, dem Novolak und der Zeit und liegt im allgemeinen bei 80 bis 120°C und bevorzugt über 100°C; in Einzelfällen kann sie auch höher oder tiefer sein.

Die zur Härtung der Phenol-Harze erforderlichen optimalen Mengen des Methylenspenders müssen im Prinzip in Vorversuchen, die einfach durchzuführen sind, ermittelt werden. Im allgemeinen sind auf 100 Gewichtsteile Phenolharz etwa 1 bis 80, vorzugsweise 2 bis 50 Gew.-% Methylenspender erforderlich.

Es ist auch möglich, Weichmacher, wie sie bei der Kautschukverarbeitung üblich sind, zuzugeben, beispielsweise aromatische, naphthenische oder paraffinische Öle, aromatische Polyäther, Phthalsäureester oder dergleichen.

Übliche Zusatzstoffe sind klebrig machende Harze, Stearinsäure, Zinkoxyd, Alterungsschutzmittel und dergleichen.

Als Stahlcord kann z.B. solcher verwendet werden, der mit Zink beschichtet ist; bevorzugt ist er jedoch mit Messing beschichtet.

Aus den erfindungsgemässen Mischungen können technische Gummiartikel hergestellt werden; sie können aber auch für die Herstellung von Kraftfahrzeugreifen verwendet werden.

Im nachstehenden Beispiel bedeutet GT = Gewichtsteile.

Beispiel

Es wird eine Grundmischung entsprechend folgender Zusammensetzung hergestellt:

| | |
|---|---|
| 70 GT | Naturkautschuk |
| 30 | Cis-Polybutadien |
| 45 | hochreaktiver Verstärker-Russ |
| 5 | aromatisches Öl |
| 15 | aktive Kieselsäure |
| 2 | Klebrigmacherharz[1] |
| 5 | Zinkoxyd |
| 1 | Stearinsäure |
| 2,5 | Alterungsschutzmittel |

| | |
|---|---|
| 4,0 | Schwefel |
| 0,7 | Benzothiazyl-2-dicyclohexylsulfenamid |

[1] handelsüblicher Alkylphenolnovolak, Fp 70–75°C (Kapillarmethode DIN 53181)

Dieser einheitlichen Grundmischung werden einzelne Portionen entnommen und, bezogen auf das darin angegebene Mengenverhältnis der Komponenten, mit den in Tabelle I angeführten Zusätzen versehen, wobei die Einarbeitung gemäss der oben beschriebenen Arbeitsweise erfolgt.

Mischung 1 beschreibt die Zusammensetzung nach der Erfindung, während V2 – V5 Vergleichsmischungen nach dem Stand der Technik zeigen. Als Novolak wurde ein handelsübliches Kondensationsprodukt aus Phenol mit Formaldehyd und als Methylenspender ein Hexamethoxymethylmelamin (HMMM), ein in rieselfähige Form durch Adsorption an Kieselsäure mit einem Gehalt an organischer Substanz von 70% gebrachtes Produkt, verwendet. Das in Vergleichsversuch V5 verwendete Resorcinharz war durch Kondensation von Resorcin mit Formaldehyd erhalten worden: Der Phenolnovolak ist handelsüblich und aus Phenol und Formaldehyd in einem Molverhältnis von 1 : (0,7–0,8) hergestellt, wobei der Schmelzpunkt nach DIN 53181 (Kapillarmethode) im Bereich von 80–100°C liegt.

An allen diesen Mischungen wurden nach den üblichen Prüfmethoden die mechanischen Eigenschaften wie Festigkeit, Dehnung, Spannungswerte bei 50% und 200% Dehnung und die Shore A Härte bestimmt. Eine Beurteilung dieser Ergebnisse lässt bezüglich der mechanischen Eigenschaften Vorteile für Mischung 1 und Vergleich V2 in bezug auf die hohen Härten und Spannungswerte bei geringer Dehnung erkennen.

Wichtiger sind jedoch die Ergebnisse der Haftungsprüfung, die wie folgt durchgeführt wurde.

In einer Versuchsanordnung gemäss der Empfehlung des Normenausschusses mit der Bezeichnung ISO DP 5603.3 des TC 45 bei der internationalen Normenorganisation ISO wurde Stahlcord der Konstruktion 4×0,25 mit einem Cu-Gehalt der Messingauflage von 67% in die Haftmischungen eingebettet. Nach der Vulkanisation bei den angegebenen Bedingungen wurden die Proben unterschiedlich gelagert und dann die Haftung an Stahlcord gemessen. Hierbei wurde jeweils aus 10 Einzelprüfungen der Mittelwert der zum Herausziehen des Cordes aus dem Vulkanisat nötigen Kraft bestimmt und ausserdem der Bedeckungsgrad subjektiv beurteilt, worunter die am herausgezogenen Cord mit Gummi bedeckte Fläche in Abstufungen von 10% zu verstehen ist (d.h. Abstufung 1,2,3...10 bedeutet 10,20,30...100% bedeckte Cordfläche).

Tabelle I: Vergleich der Haftmischungen

| | Erfindung Mischung 1<br>4 GT Phenolnovolak<br>1 GT Co-Naphthenat/<br>11% Co 2,47<br>HMMM/70%ig auf SiO$_2$ | Vergleichsbeispiele | | | |
| | | V 2<br>2,5 GT Resorcin<br>2,5 GT Hexa-methylen-tetramin | V 3<br>2,5 GT Resorcin<br>3,0 HMMM/70%ig | V 4<br>1 GT Co-Naph-thenat/<br>11% Co 70%ig | V 5<br>3 GT Resorcin-harz<br>2,5 GT HMMM/70%ig |
| Vulkanisationsbedingungen | 40'/155 °C | 45'/145 °C | 45'/145 °C | 60'/155 °C | 60'/155 °C |
| **Prüfwerte:** | | | | | |
| Festigkeit (MPa) | 16,3 | 22,9 | 19,8 | 18,0 | 18,9 |
| Dehnung (%) | 423 | 364 | 558 | 328 | 457 |
| Spannungswert ⎰ 50% (MPa) | 1,3 | 2,1 | 0,8 | 1,3 | 1,2 |
| bei Dehnung ⎱ 200% (MPa) | 5,8 | 10,4 | 3,7 | 7,1 | 5,0 |
| Härte Shore A | 72 | 74 | 62 | 70 | 68 |
| Stahlcordhaftung/<br>Bedeckungsgrad | | | | | |
| 3d 23 °C 50% rF (Ncm$^{-1}$) | 334/10 | 360/10 | 324/8 | 355/10 | 375/10 |
| 2d 120 °C F (Ncm$^{-1}$) | 268/9 | 317/10 | 313/8 | 283/10 | 289/10 |
| 3d 80 °C 100% F (Ncm$^{-1}$) | 357/10 | 79/1 | 324/5 | 302/9 | 252/7 |
| 7d 80 °C 100% F (Ncm$^{-1}$) | 323/10 | 72/1 | 146/3 | 217/5 | 156/4 |
| 14d 80 °C 100% F (Ncm$^{-1}$) | 178/3 | 59/1 | 89/1 | 184/4 | 153/3 |

rF = relative Feuchtigkeit
Die Mischung 1 sowie die Vergleichsmischungen V2–V5 sind mit der Grundmischung in einem solchen Verhältnis gemischt, dass die in der Tabelle angegebenen Mischungen jeweils auf 100 Gewichtsteile Elastomere der Grundmischung eingesetzt werden.

Die Prüfergebnisse bezüglich der Haftung und des Bedeckungsgrades zeigen, dass die erfindungsgemässe Mischung 1 unter den Bedingungen verstärkter Korrosion bei der Lagerung in feuchtheisser Atmosphäre (80°C, 100% relative Feuchtigkeit) gegenüber allen Vergleichsbeispielen höhere Haftung und besseren Bedeckungsgrad aufweist. Mit der erfindungsgemässen Kautschukmischung lassen sich somit durch Anwendung von physiologisch weniger bedenklichen und die Umwelt geringer belastenden Harzkomponenten auch technisch vorteilhaftere Lösungen des Problems finden, eine gute Haftung von Gummi an Stahlcord zu erzielen.

**Patentansprüche**

1. Kautschukmischung mit verbesserter Haftung an Stahlcord auf der Grundlage von

a) mit Schwefel vulkanisierbaren Kautschuk-Typen,
b) verstärkenden Füllstoffen,
c) Schwefel als Vulkanisationsmittel,
d) einem Phenolharz,
e) einer Verbindung eines Metalls, das in mehreren Wertigkeitsstufen auftreten kann,
f) einem Methylen-Spender und
g) gegebenenfalls weiteren üblichen Zusatzstoffen, dadurch gekennzeichnet, dass die Komponente b) 10 bis 50 Gew.-% aktive Kieselsäure enthält und die Komponente d) aus dem Harz eines ein- oder mehrwertigen Phenols mit Aldehyden besteht, in dem höchstens 30% der Phenolkomponente aus einem einkernigen mehrwertigen Phenol bestehen.

2. Mischung nach Anspruch 1, dadurch gekennzeichnet, dass der Gehalt an Kieselsäure zwischen 15 und 40 Gew.-%, bezogen auf das Gesamtgewicht der Komponente b), beträgt.

3. Mischung nach Anspruch 1 oder 2, dadurch gekennzeichnet, dass die Gesamtmenge der Füllstoffe 30 bis 150, vorzugsweise 50 bis 100 Gew.-Teile und die der Kieselsäure 5 bis 35, vorzugsweise 10 bis 30 Gew.-Teile, jeweils bezogen auf 100 Gew.-Teile Kautschuk a), beträgt.

4. Mischung nach einem oder mehreren der Ansprüche 1 bis 3, dadurch gekennzeichnet, dass das Phenolharz d) ein Novolak ist, vorzugsweise mit einem Molverhältnis des Phenols zum Aldehyd von 1:0,6 bis 1:0,9 und insbesondere auf Basis von Formaldehyd und Phenol oder einem Phenolgemisch, das einen Anteil an Alkylphenol mit 4 bis 12 C-Atomen im Alkylrest von höchstens 70 Molprozent enthält.

5. Mischung nach einem oder mehreren der Ansprüche 1 bis 4, dadurch gekennzeichnet, dass die Komponente e) ein organisch gebundenes Salz und vorzugsweise das Kobaltsalz einer gesättigten oder ungesättigten Carbonsäure ist.

6. Mischung nach einem oder mehreren der Ansprüche 1 bis 5, dadurch gekennzeichnet, dass die Komponente f) aus einem reaktiven Melaminharz besteht, wie es durch Umsetzung von einem Mol Melamin mit 0,5–6 Mol Formaldehyd erhalten wird, wobei die Methylolgruppen zumindest teilweise mit einwertigen Alkoholen mit 1–12, vorzugsweise bis 8 C-Atomen veräthert sein können.

7. Mischung nach einem oder mehreren der Ansprüche 1 bis 6, dadurch gekennzeichnet, dass der Anteil des Phenolharzes d) 0,5 bis 20, vorzugsweise 1 bis 10 Gew.-%, bezogen auf Kautschuk, beträgt.

8. Mischung nach einem oder mehreren der Ansprüche 1 bis 7, dadurch gekennzeichnet, dass der Metallgehalt der Komponente d) 0,05 bis 1, vorzugsweise 0,08 bis 0,8 Gew.-%, bezogen auf 100 Gew.-Teile Kautschuk, und die Menge des Methylen-Spenders 2 bis 50 Gew.-%, bezogen auf Phenolharz, beträgt.

9. Mischung nach einem oder mehreren der Ansprüche 1 bis 8, dadurch gekennzeichnet, dass sie in mindestens einer Phase bei einer Temperatur oberhalb des Schmelzpunkts der verschmelzbaren Komponenten, insbesondere des Novolaks, hergestellt worden ist.

10. Gummiartikel und Kraftfahrzeugreifen, hergestellt durch Vulkanisation von Kautschukmischungen gemäss einem oder mehreren der Ansprüche 1 bis 9 in Berührung mit Stahlcord, der vorzugsweise mit Messing beschichtet ist.

## Claims

1. Rubber composition having improved adhesion to steel cord, based on

a) rubber-types which are vulcanisable with sulphur,
b) reinforcing fillers,
c) sulphur as a vulcanising agent,
d) a phenolic resin,
e) a compound of a metal which may exhibit various valencies,
f) a methylene donor, and
g) optionally other conventional additives, characterised in that component b) contains 10 to 50 wt.-% of active silicic acid and component d) consists of the resin of a mono- or polyvalent phenol with aldehydes, wherein at most 30% of the phenol component consists of a mononuclear polyvalent phenol.

2. Mixture as claimed in claim 1, characterised in that the silicic acid content is between 15 and 40 wt.-%, based on the total weight of the component b).

3. Mixture as claimed in claim 1 or 2, characterised in that the total amount of fillers is 30 to 150, preferably 50 to 100 parts by weight and the total amount of silicic acid is 5 to 35, preferably 10 to 30 parts by weight, each based on 100 parts by weight of rubber a).

4. Mixture as claimed in one or more of claims 1 to 3, characterised in that the phenolic resin d) is a novolak, preferably with a molar ratio of the phenol to the aldehyde of from 1:0.6 to 1:0.9 and, more particularly, based on formaldehyde and phenol or a phenol mixture which contains an amount of alkylphenol with 4 to 12 carbon atoms in the alkyl group of at most 70 mol-%.

5. Mixture as claimed in one or more of claims 1 to 4, characterised in that component e) is an organically bound salt and is preferably the cobalt salt of a saturated or unsaturated carboxylic acid.

6. Mixture as claimed in one or more of claims 1 to 5, characterised in that component f) consists of a reactive melamine resin, as obtained by reacting 1 mol of melamine with 0.5 to 6 mols of formaldehyde, whilst the methylol groups may be at least partially etherified with monohydric alcohols having 1 to 12, preferably up to 8 carbon atoms.

7. Mixture as claimed in one or more of claims 1 to 6, characterised in that the amount of phenolic resin d) is 0.5 to 20, preferably 1 to 10 wt.-%, based on the rubber.

8. Mixture as claimed in one or more of claims 1 to 7, characterised in that the metal content of component e) is 0.05 to 1, preferably 0.08 to 0.8 wt.-%, based on 100 parts by weight of rubber, and the quantity of methylene donor is 2 to 50 wt.-%, based on the phenolic resin.

9. Mixture as claimed in one or more of claims 1 to 8, characterised in that it is prepared in at least one phase at a temperature above the melting point of the fusible components, particularly the novolak.

10. Rubber articles and vehicle tyres, produced by vulcanising rubber mixtures as claimed in one or more of claims 1 to 9 in contact with steel cord, which is preferably coated with brass.

## Revendications

1. Composition de caoutchouc qui adhère bien à des cordes d'acier et qui est à base:

a) de variétés de caoutchouc vulcanisables par du soufre,
b) de charges de renforcement,
c) de soufre en tant qu'agent de vulcanisation,
d) d'une résine phénolique,
e) d'un composé d'un métal pouvant exister sous plusieurs degrés de valence,
f) d'un donneur de méthylènes et
g) éventuellement d'autres addififs usuels, composition caractérisée en ce que la composante b) contient de 10 à 50% en poids de silice active et en ce que la composante d) est constituée d'une résine dérivant d'un monophénol ou d'un polyphénol et d'aldéhydes dans laquelle au plus 30% de la composante phénolique sont constitués d'un polyphénol à un seul noyau.

2. Composition selon la revendication 1, caractérisée en ce que la teneur en silice est comprise entre 15 et 40% en poids par rapport au poids total de la composante b).

3. Composition selon l'une des revendications 1 et 2, caractérisée en ce que la quantité totale des charges est comprise entre 30 et 150 parties en poids, de préférence entre 50 et 100, et celle de la silice est comprise entre 5 et 35 parties de-poids, de préférence entre 10 et 30, à chaque fois pour 100 parties en poids du caoutchouc a).

4. Composition selon l'une quelconque des revendications 1 à 3, caractérisée en ce que la résine phénolique d) est une novolaque, de préférence une novolaque dans laquelle le rapport molaire du phénol à l'aldéhyde est compris entre 1:0,6 et 1:0,9, plus particulièrement à base de formaldéhyde et de phénol ou d'un mélange de phénols renfermant au plus 70% en moles d'un alkylphénol à alkyle en $C_4$–$C_{12}$.

5. Composition selon l'une quelconque des revendications 1 à 4, caractérisée ce que la composante e) est un sel organiquement lié, de préférence le sel de cobalt d'un acide carboxylique saturé ou insaturé.

6. Composition selon l'une quelconque des revendications 1 à 5, caractérisée en ce que la composante f) est constituée d'une résine de mélamine réactive, telle que celle que l'on obtient par réaction de 1 mole de mélamine avec de 0,5 à 6 moles de formaldéhyde, les radicaux méthylols pouvant être éthérifiés, au moins partiellement, par des monoalcools contenant de 1 à 12 atomes de carbone, de préférence au plus 8.

7. Composition selon l'une quelconque des revendications 1 à 6, caractérisée en ce que la teneur en résine phénolique d) est de 0,5 à 20% en poids, de préférence de 1 à 10% en poids, par rapport au caoutchouc.

8. Composition selon l'une quelconque des revendications 1 à 7, caractérisée en ce que la teneur en métal de la composante e) est de 0,05 à 1% en poids, de préférence de 0,08 à 0,8%, pour 100 parties en poids de caoutchouc, et la quantité du donneur de méthylènes est de 2 à 50% en poids par rapport à la résine phénolique.

9. Composition selon l'une quelconque des revendications 1 à 8, caractérisée en ce qu'elle a été préparée, en au moins une phase, à une température supérieure au point de fusion des composantes fusibles, en particulier de la novolaque.

10. Articles en caoutchouc et pneumatiques de véhicules automobiles qui ont été fabriqués par vulcanisation de compositions de caoutchouc selon l'une quelconque des revendications 1 à 9 au contact de cordes d'acier, de préférence de cordes d'acier recouvertes de laiton.